# EUROPEAN PATENT APPLICATION

(11) **EP 1 492 336 A1**
(43) Date of publication of application: **29.12.2004**
(21) Application number: 04014137.6
(22) Date of filing: 16.06.2004
(51) Int. Cl.: H04N 5/44, H04N 5/445

(54) **Video signal supply device and video display device**

(30) Priority: 27.06.2003 JP 2003184290
(71) Applicant: Pioneer Corporation, Meguro-ku, Tokyo (JP)
(72) Inventor: Noda, Yasuyuki, c/o Pioneer Tokorozawa Plant, Tokorozawa-city, Saitama (JP); Minoshima, Kunihiro, c/o Pioneer Tokorozawa Plant, Tokorozawa-city, Saitama (JP)
(74) Representative: Betten & Resch

(57) **Abstract**

A video display device is connected to a video signal supply device. The video display device has a plurality of input terminals. The video signal supply device stores the input terminal # of the video display device, which is used to input an initial setting signal from the video signal supply device. Thereafter, when the video signal supply device supplies an analog video signal to the video display device, the video signal supply device informs the video display device of the input terminal # stored during the initial setting processing. The video display device then selects an input terminal based on the informed terminal # to capture the analog video signal from the video signal supply device. The exchange of information relating to the input terminal between the video signal supply device and video display device is executed by using a digital interface based on the IEEE1394 Standard, for example.

## Description

### BACKGROUND OF THE INVENTION

### 1. Field of the Invention

The present invention relates to a video signal supply device and a video display device that receives the supply of a video signal via a plurality of input terminals, for example.

### 2. Description of the Related Art

Conventionally, a variety of systems that connect a video signal supply device such as a DVD (Digital Versatile Disc) player, DVD recorder, or the like to a video display device such as a television monitor to transmit video signals between the video signal supply device and the video display device are known. As one such example, Japanese Patent Kokai (Laid Open Publication) No. 2002-344898 discloses a technology that connects a video signal supply device to a video display device through combined usage of a normal analog signal interface and a digital signal interface of the IEEE1394 Standard. The IEEE 1394 Standard is a standard standardized by the IEEE (American Institute of Electrical and Electronic Engineers) that regulates connections between computer devices and audiovisual devices, and between audiovisual devices and audiovisual devices. Under the IEEE 1394, it is possible to transmit digital signals at speeds on the order of several hundred megabits per second to several gigabits per second.

Therefore, in a case where a DVD player and television monitor are connected to each other by the combined usage of an analog interface and IEEE1394 interface, the supply of a video signal from the DVD player to the television monitor can be executed via the analog interface or the IEEE1394 interface (digital interface).

However, a single video display device such as a television monitor is often connected to a plurality of video signal supply devices. In other words, the video display device generally includes a plurality of analog signal input terminals suited to the respective video signal supply devices. Therefore, when the video signal supply from a DVD player to the television monitor is switched from "via an IEEE1394 interface" to "via an analog interface," the television monitor is unable to determine which analog signal input terminal the television monitor should select in order to receive a video signal from the DVD player.

Therefore, each time the interface format is switched, the user must manually select one of the analog signal input terminals of the television monitor. This adversely affects the convenience of the device operation.

### SUMMARY OF THE INVENTION

One object of the present invention is to provide a highly operable and user-friendly video signal supply device.

Another object of the present invention is to provide a highly operable and user-friendly video display device.

Still another object of the present invention is to provide an improved method for selecting suitable one of signal input terminals of a video display device.

According to one embodiment of the present invention, there is provided a video signal supply device adapted to supply, to a video display device that includes a digital signal input terminal and a plurality of analog signal input terminals, a digital signal via the digital signal input terminal and an analog video signal via one of the analog signal input terminals. The video signal supply device includes a first circuit for capturing and storing terminal designation information which specifies one of the analog signal input terminals. The video signal supply device also includes a second circuit for communicating the terminal designation information from the first circuit to the video display device via the digital signal input terminal when supply of the analog video signal to the video display device via the selected one of the analog signal input terminals is started.

According to another embodiment of the present invention, there is provided a video display device that includes a digital signal input terminal for receiving a digital signal from a video signal supply device. A terminal designation information is also supplied to the video display device from the video signal supply device via the digital signal input terminal. The video display device further includes a plurality of analog signal input terminals. An analog video signal is supplied to the video display device from the video signal supply device via one of the analog signal input terminals. The video display device also includes a circuit for selecting one of the analog signal input terminals, based on the terminal designation information supplied by the video signal supply device.

According to still another embodiment of the present invention, there is provided a method for selecting one of a plurality of analog signal input terminals of a video display device when an analog video signal is supplied by a video signal supply device to the video display device via the selected one of the analog signal input terminals. The video display device also includes a digital signal input terminal. The method includes capturing and storing terminal designation information which specifies one of the analog signal input terminals. The method also includes communicating the terminal designation information to the video display device via the digital signal input terminal when supply of the analog video signal from the video signal supply device to the video display device via one of the analog signal input terminals is started. The method also includes selecting one of the analog signal input terminals of the video display device, based on the terminal designation information communicated.

These and other objects, aspects and advantages will become apparent to those skilled in the art from the following description and appended claims when read and understood in conjunction with the accompanying drawings.

### BRIEF DESCRIPTION OF THE DRAWINGS

Fig. 1 schematically illustrates a video signal supply system according to one embodiment of the present invention;
Fig. 2 illustrates a block diagram of a video signal supply device in the video supply system shown in Fig. 1;
Fig. 3 is a block diagram of a video display device in the video supply system shown in Fig. 1;
Fig. 4 illustrates when one signal input terminal is selected in the video signal supply system in Fig. 1;
Fig. 5 shows an example of an initial settings screen during initial setting processing of the video signal supply system in Fig. 1; and
Fig. 6 is similar to Fig. 4, and illustrates when another signal input terminal is selected in the video signal supply system in Fig. 1.

### DETAILED DESCRIPTION OF THE INVENTION

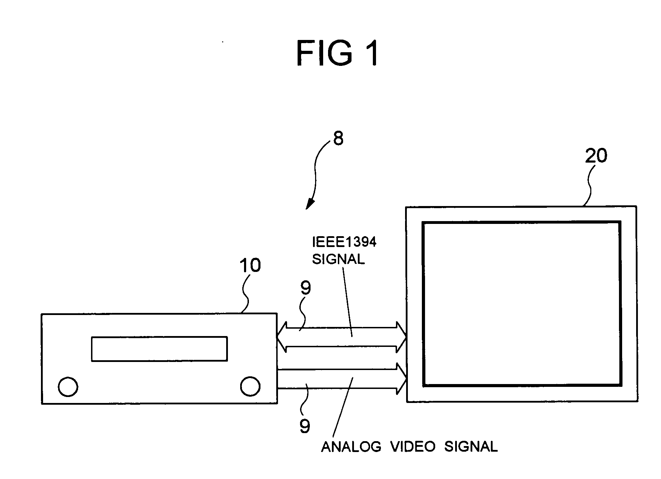

Referring to Fig. 1, a video signal supply system 8 according to one embodiment of the present invention is described. The video signal supply system 8 includes a video signal supply device 10 and a video display device 20.

The video signal supply device 10 is, for example, a DVD recorder that plays back video recording disks and outputs the played back video signal. The video display device 20 is a television monitor that uses a cathode ray tube, plasma display panel, or electroluminescent display panel, for example. The video display device 20 displays a video signal supplied by the video signal supply device 10. The video signal from the video signal supply device 10 is supplied to the video display device 20 via an analog interface or an IEEE1394 interface. The connection 9 between the video signal supply device 10 and video display device 20 may be a wired connection formed by an ordinary cable or a wireless connection that employs weak radio waves, infrared rays, or the like.

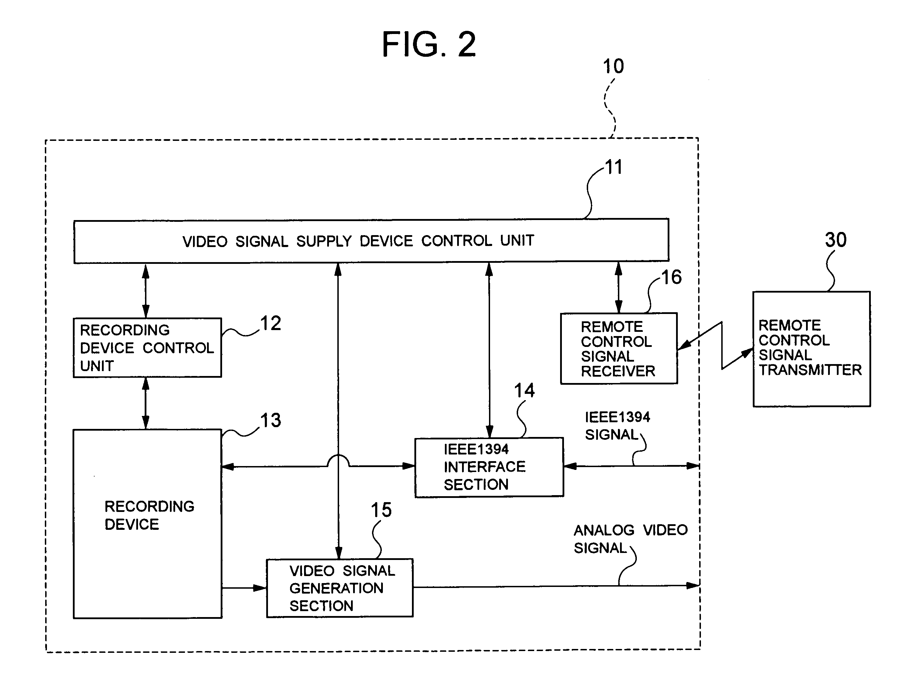

Next, the constitution of the video signal supply device 10 is described while referring to the block diagram shown in Fig. 2.

As illustrated in Fig. 2, the video signal supply device 10 has a control unit 11 (hereinafter referred to as the "first control unit 11"). The first control unit 11 includes a microcomputer, a memory circuit including a ROM and RAM, and the peripheral circuits thereof. The first control unit 11 performs centralized control of the operation of the whole video signal supply device 10. The ROM in the memory circuit stores a variety of programs that regulate the operation of the video signal supply device 10. Various functions of the video signal supply device 10 are implemented as a result of the microcomputer running these programs one step at a time in sync with an internal clock. A variety of flags and various computational result values and so forth from this program execution process are temporarily stored in the RAM of the memory circuit.

The first control unit 11 is connected, via the busline of the microcomputer, to the respective circuits in the video signal supply device 10, such as a recording device control unit 12, an IEEE1394 interface section 14 (hereinafter referred to as the "first interface section 14"), a video signal generation section 15 (hereinafter referred to as the "first video signal generation section 15"), and a remote control signal receiver 16 (hereinafter referred to as the "first remote control signal receiver 16"). These circuits will be described subsequently.

The recording device control unit 12 is a control circuit that drives and controls a recording device 13, which is a recording medium for video signals or the like. The recording device control unit 12 may be constituted by an IC chip such as an LSI with special specifications. The recording device 13 is a large-capacity storage medium such as a hard disk device, and stores digital video data captured from a DVD or network distribution system (neither of which is shown).

The first interface section 14 is a circuit that converts a variety of data including video data from the recording device 13 into a signal that is based on the IEEE1394 Standard on the basis of a predetermined protocol and timing, and sends the resulting signal to the IEEE1394 interface. The first video signal generation section 15 is a circuit that converts video data from the recording device 13 into an analog video signal and then outputs this analog video signal to an analog interface bus. The operations of the first interface section 14 and first video signal generation section 15 are controlled by the first control unit 11.

The first remote control signal receiver 16 is a circuit that receives a command from a remote control signal transmitter 30 (hereinafter referred to as the "first remote control signal transmitter 30") and communicates this command to the first control unit 11. The first remote control signal transmitter 30 allows the user to issue commands for the various operations of the video signal supply device 10 and exchanges various data with the first remote control signal receiver 16 by using wireless media such as infrared rays, weak radio waves, or the like.

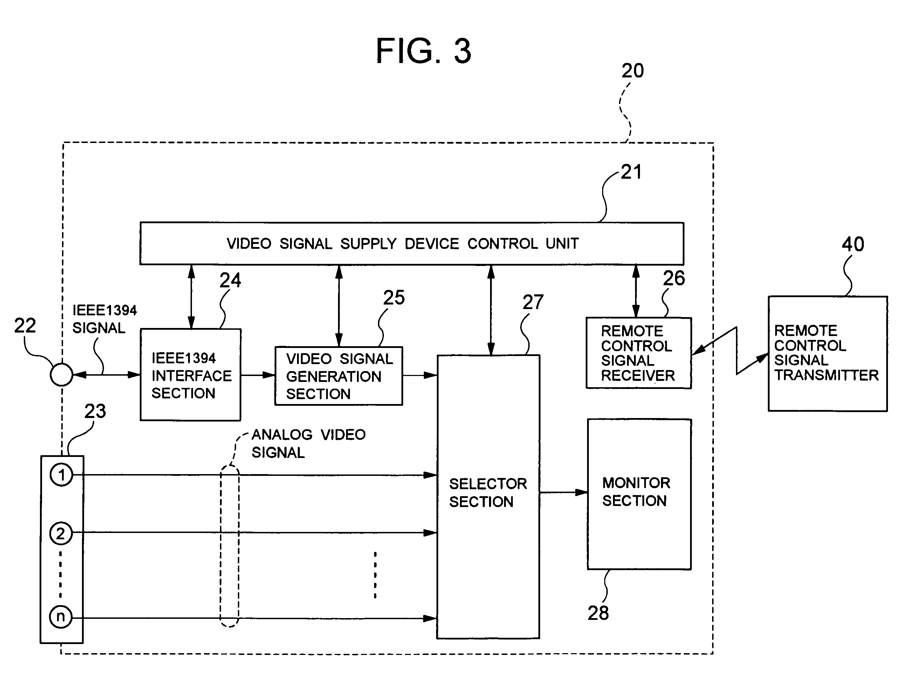

Next, the video display device 20 will be described with reference to the block diagram shown in Fig. 3.

As illustrated in Fig. 3, the video display device 20 has a control unit 21 (hereinafter referred to as "second control unit 21"). The second control unit 21 includes a second microcomputer, a second memory circuit including a ROM and RAM, and the peripheral circuits thereof. The second control unit 21 performs centralized control of the operation of the whole video display device 20. The ROM in the second memory circuit stores a variety of programs that regulate the operations of the video display device 20. Various functions of the video display device 20 are implemented as a result of the second microcomputer running these programs one step at a time in sync with an internal clock. A variety of flags and various computational result values and so forth of this program execution process are temporarily stored in the RAM of the second memory circuit.

The second control unit 21 is connected, via the busline of the second microcomputer, to the respective circuits in the video display device 20, such as an IEEE1394 interface section 24 (hereinafter referred to as the "second interface section 24"), a video signal generation section 25 (hereinafter referred to as the "second video signal generation section 25"), a remote control signal receiver 26 (hereinafter referred to as the "second remote control signal receiver 26"), and a selector section 27, and so forth. These circuits which will be described subsequently.

The video display device 20 has a digital signal input terminal (or port) 22 to which digital signals of the IEEE1394 Standard are supplied from the video signal supply device 10. The digital signal input terminal 22 is constituted by connectors based on the IEEE1394 Standard. When the IEEE1394-standard interface is used, a so-called "daisy chain" is established, which connects the interface and devices by cables one after another. The daisy chain will not be described in detail here because no direct relationship exists between implementation of the embodiment of the invention and the daisy chain.

The second interface section 24 is a circuit that exchanges data signals with the video signal supply device 10 via the digital signal input terminal 22 on the basis of a protocol and timing of the IEEE1394 Standard. The second video signal generation section 25 is a circuit that decodes IEEE1394 interface-format video data received by the second interface section 24 to an analog video signal and then outputs the analog video signal to the selector section 27. The operations of the second interface section 24 and second video signal generation section 25 are controlled by the second control unit 21.

The video display device 20 also has an analog signal input terminal (or port) assembly 23 to receive analog video signals from the video signal supply device 10. Generally, a single video display device such as a television monitor is employed for a plurality of video signal sources such as a DVD player, VTR, and so forth. Therefore, in this embodiment, as shown in Fig. 3, the analog signal input terminal assembly 23 includes a plurality of signal input terminals from #1 to #n. That is, an analog video signal supplied by the video signal supply device 10 is connected to a certain terminal of the analog signal input terminal assembly 23.

The selector section 27 is, for example, a video signal selection circuit that uses an FET or other semiconductor as a switching element. The selector section 27 selects one of the outputs of the second video signal generation section 25 and the analog signal input terminal assembly 23 so as to connect the selected output (selected terminal) to a monitor circuit 28. The selection operation by the selector section 27 is controlled by means of control signals from the second control unit 21.

The monitor section 28 is a video display section that employs a cathode ray tube or a display panel such as a plasma display panel or liquid crystal display panel, for example. The monitor section 28 plays back and displays the video signal selected by the selector section 27.

The second remote control signal receiver 26 is a circuit that receives commands from a remote control signal transmitter 40 (hereinafter referred to as the "second remote control signal transmitter 40") and communicates these commands to the second control unit 21. The second remote control signal transmitter 40 allows the user to issue commands for the various operations of the video display device 20 and exchanges various data with the second remote control signal receiver 26 by using wireless media such as infrared rays, weak radio waves, and so forth. The second remote control signal transmitter 40 may be provided in a common housing together with the first remote control signal transmitter 30 of the video signal supply device 10.

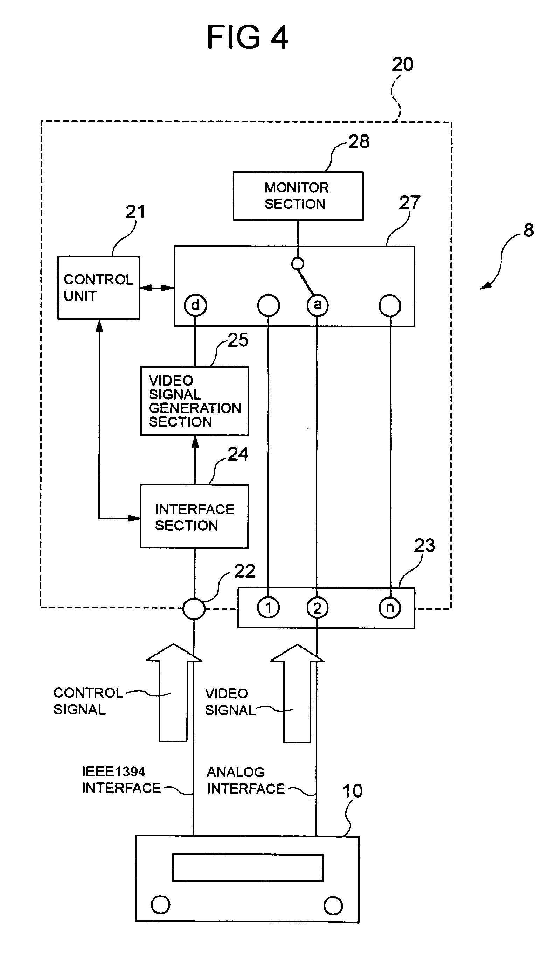

Next, the operation of the video signal supply system 8 will be described with reference to Fig. 4.

As shown in Fig. 4, it is assumed that the analog interface of the video signal supply device 10 is connected to the second terminal #2 in the analog signal input terminal assembly 23 and that the analog video signal supplied by the video signal supply device 10 is thus introduced to the second terminal #2. It is also assumed that the IEEE1394-interface digital signal (hereinafter referred to simply as the "IEEE1394 signal") supplied by the video signal supply device 10 is connected to the digital signal input terminal 22 of the video display device 20. In Fig. 4, those constituent parts in the video signal supply device 10 and the video display device 20 that are not directly related to the following operation are omitted.

First, the power supply of both the video signal supply device 10 and video display device 20 is turned on, and the initial setting processing is begun as a result of the user pressing the device reset switch(es). In this initial setting processing, the video signal supply device 10 and video display device 20 transmit a variety of control signals based on the IEEE1394 Standard such as AV/C commands, for example, to each other via the IEEE1394 interface. Generally, the user enters various initial setting parameters with the display screen of the monitor section 28 of the video display device 20.

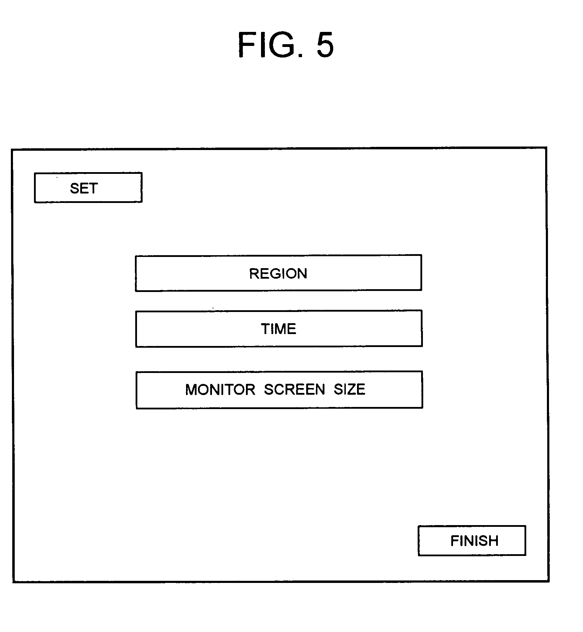

During the initial setting processing, the initial settings screen shown in Fig. 5 is displayed on the display of the monitor section 28, for example. In Fig. 5, the "region" indicates where the device is installed. This region information is used to perform channel setting for a ground wave tuner. The "time" shows a current time. The "monitor screen size" is used to display an image in a 9:16 ratio, for example, which has a larger width than the normal 3: 4 ratio. The user carries out the initial setting processing by designating and inputting items in accordance with this initial settings screen. Therefore, in the initial settings processing, an analog video signal for displaying the initial settings screen is supplied by the video signal supply device 10 to the video display device 20.

That is, in performing the initial setting processing, the user designates a particular input terminal in the analog signal input terminal assembly 23 to which the analog interface of the video signal supply device 10 is to be connected. This designation is performed as a result of the user using the second remote control signal transmitter 40 of the video display device 20. In this case, the designated terminal number captured by the video display device 20 is communicated to the first control unit 11 of the video signal supply device 10 via the IEEE1394 interface. It should be noted that the designation of this terminal number may be performed as a result of the user using the first remote control signal transmitter 30 or may be performed directly via the console panel of the video signal supply device 10. That is, in this embodiment, the second terminal #2 in the analog signal input terminal assembly 23 is designated by the user. As the timing for ultimately determining the terminal number, timing such as when the initial settings are complete, for example, may be used.

When the designation of the terminal number of the analog signal input terminal assembly 23 is complete, the first control unit 11 of the video signal supply device 10 stores the designated terminal number in the first memory circuit and also communicates this terminal number to the video display device 20 by using an IEEE1394 interface control signal such as an AV/C command. When the video display device 20 receives the terminal number designation via the IEEE1394 interface, the second control unit 21 issues a control signal to the selector 27 to select a connection point a. Accordingly, the analog video signal that is input to the second terminal #2 of the analog signal input terminal assembly 23 is supplied to the monitor section 28.

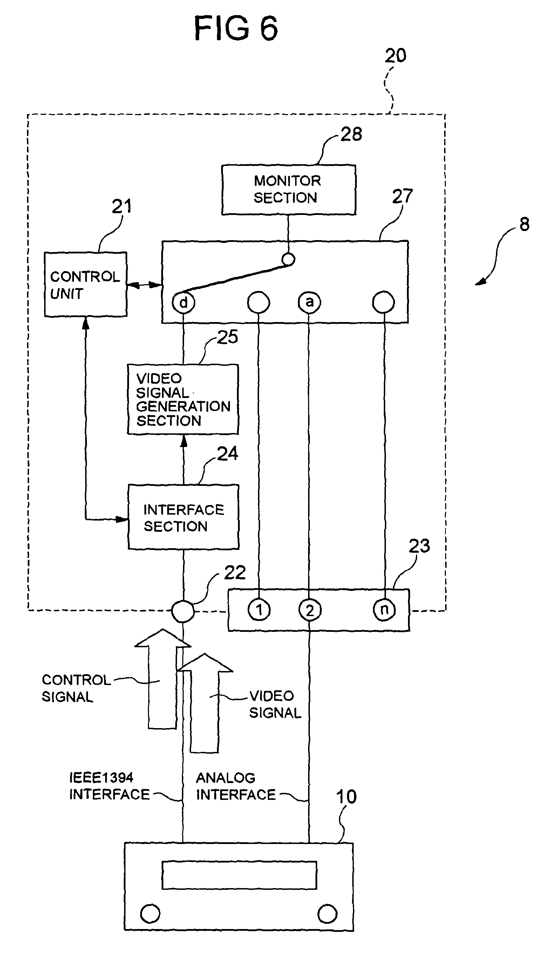

When, after the initial setting processing is complete, the user selects the IEEE1394 interface as the transmission route for supplying the video signal, this control information (selection information) is communicated to the video display device 20 via the IEEE1394 interface. As a result, as shown in Fig. 6, the second control unit 21 of the video display device 20 causes the selector section 27 to select the connection point d. A digital video signal, which is transmitted to the video display device 20 via the IEEE1394 interface, is then converted to an analog signal by the second video signal generation section 25 and the resulting analog video signal is then supplied to the monitor section 28. Control that is similar to the control described above is performed also when the video signal is supplied by means of the IEEE1394 interface alone.

Next, a case where the user switches the transmission channel for the supply of the video signal from the IEEE1394 interface to the analog interface will be assumed. In this case, the user enters a switching command to the video signal supply device 10 by using the first remote control signal transmitter 30. Upon receiving this command, the first control unit 11 of the video signal supply device 10 reads the terminal number (#2) of the analog signal input terminal assembly 23 that was stored in the first memory circuit during the initial setting processing and then communicates the terminal number to the video display device 20 via the IEEE1394 interface by using a control signal such as an AV/C command.

When the video display device 20 receives the information of the terminal number, the second control unit 21 outputs a control signal that causes the selector section 27 to select the connection point a. As a result, the second terminal #2 of the analog signal input terminal assembly 23 is connected to the analog monitor section 28 once again as shown in Fig. 4. After confirming the selection switching of the video display device 20 via the IEEE1394 interface, the video signal supply device 10 supplies a video signal to the video display device 20 via the analog interface. Similar control to that described above is also performed when the video signal is supplied by means of the analog interface alone.

Because of the hardware constitution of the devices and copyright protection for the content contained in the video signal, the video signal supply is sometimes admitted only via an analog interface or an IEEE1394 interface. In this case, the video signal supply device 10 transmits a predetermined control signal to the video display device 20 and processing for a switch to an accessible input terminal in the video display device 20 is performed. When a video signal supplied via the IEEE1394 interface cannot be displayed by the video display device 20 or when a video signal is not supplied via the IEEE1394 interface even though the IEEE1394 interface has been designated, the video display device 20 switches the input terminal of the video signal to the analog interface.

Similar to the initial setting processing, the user may issue the interface-format switching command via the second remote control signal transmitter 40 of the video display device 20.

As described above, in the video signal supply system 8 the analog signal input terminal of the video display device 20 that is used when initial settings are made is stored. Then, when the supply channel for the video signal is switched to the analog interface, the analog signal input terminal is selected by using this stored data. Therefore, an input terminal selection operation by the user at the time of a switch to the analog interface is no longer required.

The video signal supply system 8 employs commands that are standardized according to the IEEE1394 interface standard in relaying input signal terminal selection commands. Therefore, any type of device can be used in the video signal supply system 8 without restriction as long as the device includes an IEEE1394 Standard interface.

In summary, an embodiment of the invention can be described as follows:

A video display device is connected to a video signal supply device. The video display device has a plurality of input terminals. The video signal supply device stores the input terminal # of the video display device, which is used to input an initial setting signal from the video signal supply device. Thereafter, when the video signal supply device supplies an analog video signal to the video display device, the video signal supply device informs the video display device of the input terminal # stored during the initial setting processing. The video display device then selects an input terminal based on the informed terminal # to capture the analog video signal from the video signal supply device. The exchange of information relating to the input terminal between the video signal supply device and video display device is executed by using a digital interface based on the IEEE1394 Standard, for example.

## Claims

1. A video signal supply device adapted to supply, to a video display device that includes a digital signal input terminal and a plurality of analog signal input terminals, a digital signal via the digital signal input terminal and an analog video signal via one of the plurality of analog signal input terminals, the video signal supply device comprising:
a terminal information holding circuit for capturing and storing terminal designation information which specifies the one of the plurality of analog signal input terminals; and
a terminal information communication circuit for communicating the terminal designation information stored by the terminal information holding circuit to the video display device via the digital signal input terminal when supply of the analog video signal to the video display device via the one of the plurality of analog signal input terminals is started.

2. The video signal supply device according to claim 1, wherein the digital signal is a signal based on the IEEE1394 Standard.

3. A video display device comprising:
a digital signal input terminal for receiving a digital signal and terminal designation information from a video signal supply device;
a plurality of analog signal input terminals for receiving an analog video signal from the video signal supply device at one of the plurality of analog signal input terminals; and
a selection circuit for selecting the one of the plurality of analog signal input terminals, based on the terminal designation information supplied by the video signal supply device.

4. The video display device according to claim 3, wherein the digital signal is a signal based on the IEEE1394 Standard.

5. A method for selecting one of a plurality of analog signal input terminals of a video display device when an analog video signal is supplied by a video signal supply device to the video display device via the selected one of the plurality of analog signal input terminals, the video display device including a digital signal input terminal and the plurality of analog signal input terminals, the method comprising:
capturing and storing terminal designation information which specifies the one of the plurality of analog signal input terminals;
communicating the terminal designation information to the video display device via the digital signal input terminal when supply of the analog video signal from the video signal supply device to the video display device via the one of the plurality of analog signal input terminals is started; and
selecting the one of the plurality of analog signal input terminals of the video display device, based on the terminal designation information communicated.
